# EUROPEAN PATENT APPLICATION

(11) **EP 2 474 932 A1**
(43) Date of publication of application: **11.07.2012**
(21) Application number: 12150666.1
(22) Date of filing: 10.01.2012
(51) Int. Cl.: G06F 21/00

(54) **Efficient volume encryption**

(30) Priority: 11.01.2011 US 201161431704 P; 12.10.2011 US 201113271868
(71) Applicant: SafeNet, Inc., Belcamp, MD 21017 (US)
(72) Inventor: Dunn, Chris, Manotick, Ontario K4M 1J4 (CA)
(74) Representative: Anderson, Angela Mary

(57) **Abstract**

A computer system comprises a first region including a base image in the form of machine readable code stored on a non-volatile storage medium, a second region including a machine image in the form of machine readable code stored on a non-volatile storage medium, and a deduplicator. The second region machine image comprises a base part sufficiently similar to the base image for deduplication, and a part special to the second region machine image. The first region base image and the second region machine image are deduplicated by the deduplicator. The second region special part is encrypted by full disk encryption using a key not available to the first region. Methods of, and computer programs for, implementing such a system are described.

## Description

### BACKGROUND OF THE INVENTION

In order to make efficient use of storage systems for electronic data, it has been proposed to use "deduplication" systems, in which duplicated information is identified, stored as a single copy, and additional copies are replaced by a cross-reference to the single copy. For example, in a large computing system that runs many distinct instances of the same operating system, either on separate physical machines or as virtual machines, the instances of the operating system may be very similar. In that case, it may be efficient to maintain a single master copy of the common operating system, and to maintain for each instance a much smaller "delta" file that contains only the differences from the common master copy. The delta file may be generated incrementally, either by adding to it whenever the instance writes changes to its operating system, or by periodically taking a "snapshot" backup of the instance and comparing it against the master copy. Then, when a virtual machine desires to boot up its operating system, or to use parts of its operating system that are not permanently resident in memory while the virtual machine is running, the virtual machine calls to its delta file for pages of the operating system that are stored there, and to the master copy for pages for which it does not have a delta file.

In another example, a process at an infrastructure level may scan stored programs and other data, either systematically or when new data is saved, to identify duplicate data, in any convenient unit size. Then, when duplicates are identified, one copy is stored, and other instances are replaced by a pointer to the stored copy, a process referred to as "compression" deduplication.

The higher the level of the hierarchy of the computer system at which deduplication is applied, the more duplicates can be eliminated. However, if the entire system is not under common control, this may involve the higher level intruding on the autonomy of the lower levels. For example, in a large "cloud computing" system, the proprietor of the cloud may provide resources and infrastructure to numerous tenants each of whom runs its own virtual machines, and who have no connection with each other, and none with the cloud proprietor except that they rent the use of resources from the proprietor. The proprietor may itself rent and aggregate resources from numerous third parties with which it has no other relationship. In such a cloud, it might be most efficient for the cloud proprietor to maintain a master set of common versions of common operating systems and common applications that is shared by all the tenants. However, applying either "snapshot" or "compression" deduplication then requires the deduplicator to operate at the cloud proprietor's level, and to have access to the interior of all the tenants' virtual machines. That then enables the cloud proprietor, and any other entity with authorized or unauthorized access to the cloud proprietor's level of the hierarchy, possibly including third party resource providers, to have access to the tenants' activities.

In order to protect a computer system against unauthorized copying of its programs and/or data, it has been proposed to use "full disk encryption." When the computer or virtual machine is inactive, the entire long term non-volatile storage, typically a hard disk, is encrypted, except for a small "pre-boot environment" (PBE). The pre-boot environment typically contains a bootstrap loader and sufficient functional code to authenticate that it is authorized to run, and to obtain and use one or more data encryption keys (DEK) or "disk wrapping keys" (DWK) to decrypt the remainder of the hard disk. However, with any modern cryptographic system that is even moderately secure, that effectively randomizes the entire hard disk except for the PBE.

When full disk encryption is applied by the tenant to a virtual disk of a virtual machine in a cloud, it effectively prevents, and may be intended to prevent, the proprietor and other supervisory level entities or processes from accessing the virtual machine, at least while the virtual machine is inactive. Such encryption incidentally defeats any attempt at deduplication between different virtual machines.

### SUMMARY OF THE INVENTION

According to one embodiment of the invention, there are provided systems, methods, and computer programs for encryption of disk images of multiple physical or virtual machines that can permit deduplication across different machines while preserving the privacy of the disk images against the deduplicator and other processes or entities having similar privileged access.

In one embodiment, a disk image is segregated into a common part and a special part. The common part is duplicative of other machines, and is deduplicated into a single master copy that is stored either unencrypted or with a common encryption key. The special part is encrypted using an encryption key that is specific to the machine.

In a further embodiment, at least one disk image also contains a part that is shared with another disk image, and is deduplicated at a more local level than the common part into the shared part of the other disk image.

In a further embodiment, a physical or virtual machine may be segregated into two or more disk volumes, one or more of which is deduplicated with a corresponding disk volume of another machine, and one or more of which is special to the individual machine. For example, the operating system may be on one disk volume, a suite of application software on a second disk volume, and the user's data on a third disk volume. Then, the first disk volume may be deduplicated with a large number of other physical and/or virtual machines, the second disk volume may be deduplicated with a smaller number of machines the users of which require the same suite of common applications, and the third disk volume may be special to the individual machine. In a still further embodiment, one or more of those disk volumes may be segregated into a common part and a special part, as described above.

Other aspects of the invention include methods, computers and computer systems, computer programs, and non-transitory computer-readable storage media containing computer programs.

### BRIEF DESCRIPTION OF THE DRAWINGS

The above and other aspects, features, and advantages of the present invention may be more apparent from the following more particular description of embodiments thereof, presented in conjunction with the following drawings. In the drawings:
FIG. 1 is a schematic diagram of an embodiment of a computer system.
FIG. 2 is a functional block diagram of parts of a computer system.
FIG. 3 is a flow-chart.

### DETAILED DESCRIPTION OF THE PREFERRED EMBODIMENTS

A better understanding of various features and advantages of the present methods and devices may be obtained by reference to the following detailed description of illustrative embodiments of the invention and accompanying drawings. Although these drawings depict embodiments of the contemplated methods and devices, they should not be construed as foreclosing alternative or equivalent embodiments apparent to those of ordinary skill in the subject art.

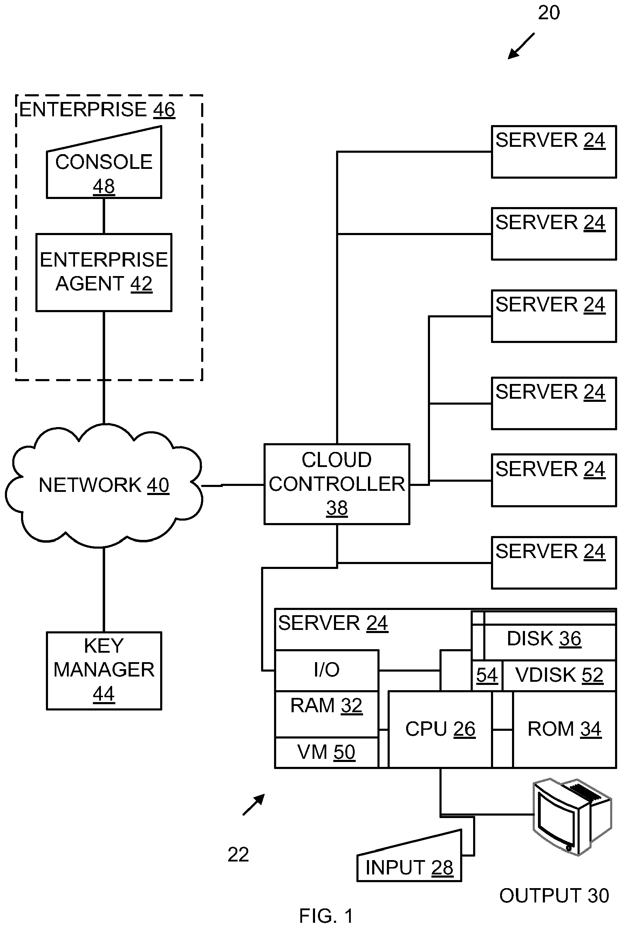

Referring to the drawings, and initially to FIG. 1, one embodiment of a cloud computing system indicated generally by the reference number 20 comprises a cloud 22 comprising a number of servers 24 each comprising, among other equipment, a processor 26, input and output devices 28, 30, random access memory (RAM) 32, read-only memory (ROM) 34, and magnetic disks or other long-term storage 36. The servers 24 are connected through a cloud controller 38 to an external network or other communications media 40.

The cloud controller 38 has various functions, including controlling access to cloud 22, assigning and controlling access to resources within cloud 22, and hypervising virtual machines. The cloud controller 38 may itself be one or more servers 24 or structurally similar computer devices. The cloud controller 38 may in fact comprise separate processes running on separate physical machines, and the various functions may be grouped and distributed depending on the circumstances of a specific embodiment. Except as described below, these functions and their implementations may be conventional and, in the interests of conciseness, will not be further described.

Also connected to external network 40 are an enterprise agent 42 of an enterprise 46 and a key manager 44. The enterprise agent 42 may itself be a computer similar in general structure to the servers 24, but under direct control of a human administrator through a console 48 comprising input and output devices 28, 30. A typical cloud 22 may be connected to numerous independent enterprise agents 42. However, in the interests of simplicity and clarity, the present specification describes and illustrates in detail a single enterprise agent 42, representing a typical tenant of resources in cloud 22.

The key manager 44 may itself be a computer similar in general structure to the servers 24, but under direct or indirect control of the human administrator at console 48. There may be more than one key manager 44 serving the proprietor of cloud 22 and various enterprises 46.

In operation of cloud 22, the cloud controller 38 tracks available resources within cloud 22 and assigns resources to meet demands from enterprises 46 through their agents 42. Cloud controller 38 also tracks resources already assigned to an enterprise 46, and ensures that when an enterprise agent 42 calls on such resources they are made available transparently, after verification that the specific enterprise agent 42 is entitled to access the specific assigned resource. Where the cloud activities of the enterprise 46 to which enterprise agent 42 belongs include providing services or information to third parties, cloud controller 38 may also manage communications between such third parties and resources assigned to enterprise agent 42. A server 24 may support one or more virtual machines 50, and the virtual disks 52 of those virtual machines may be uploaded from physical storage when launching a virtual machine as well as physical disks 36 for storage. The virtual disks 52 may be maintained in encrypted form except for a pre-boot environment 54 containing a decryption program and a bootstrap loader. Various structures for clouds 22, and their methods of operation, are well known in the art and, in the interests of conciseness, are not further described here.

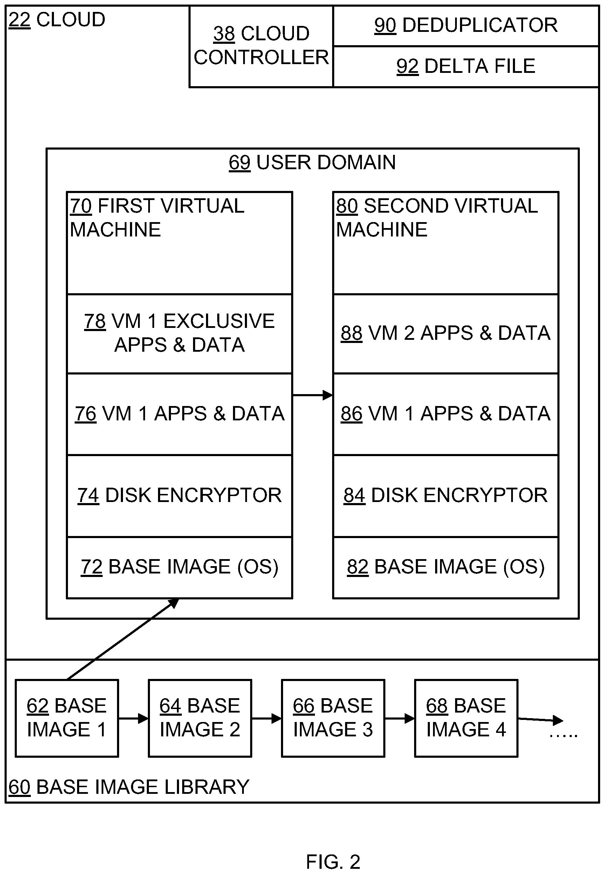

Referring now also to FIG. 2, in one example of a cloud, the cloud proprietor maintains a library 60 containing a plurality of base images 62, 64, 66, 68, etc. The base images may each be a modified version of the one before, as illustrated, or may be independent. Each base image 62, etc. may be a disk image for a virtual machine, provisioned at least with an operating system and a disk encryptor utility, and optionally with a set of standard application software. The base image may be configured for use in cloud 22, but is not customized for a specific virtual machine or for a specific tenant.

Each tenant 46 maintains a domain 69 in the cloud 22, which contains one or more virtual machines 70, 80. An exemplary virtual machine 70 contains a base image 72 that is an instance of one of the base images 62 in the library 60, a disk encryptor utility 74, and an area 76, 78 of applications and other data specific to virtual machine 70. When virtual machine 70 is not in use, specific data area 78 is encrypted by disk encryptor 74 using full disk encryption techniques, and using a key under control of tenant 46. Virtual machine 70 is subject to deduplication by deduplicator 90 at the cloud level under control of cloud controller 38. Because specific data area 78 is encrypted by disk encryptor 74, it effectively defies deduplication. However, base image 72 is not encrypted by disk encryptor 74 so it can be, and is, deduplicated into base image 62.

Areas 72, 74, 76, 78 may be separately managed areas within a single virtual disk volume. Alternatively, some or all of those areas may be embodied as separate virtual disk volumes. That has the advantage that a conventional whole disk encryption procedure may be used for each of the volumes 72, 76, 78, while still maintaining the segregation necessary for deduplication of the encrypted volumes at the desired level in the cloud hierarchy. Managing areas as separate virtual disk volumes also simplifies updating any of those volumes, and updating key versions for any of those volumes, independently of the other volumes, even while the other volumes remain in inactive, encrypted form. Where the areas are managed as parts of a single disk volume, greater care is required to ensure that updates to one area do not disrupt the encryption of other areas on the same volume.

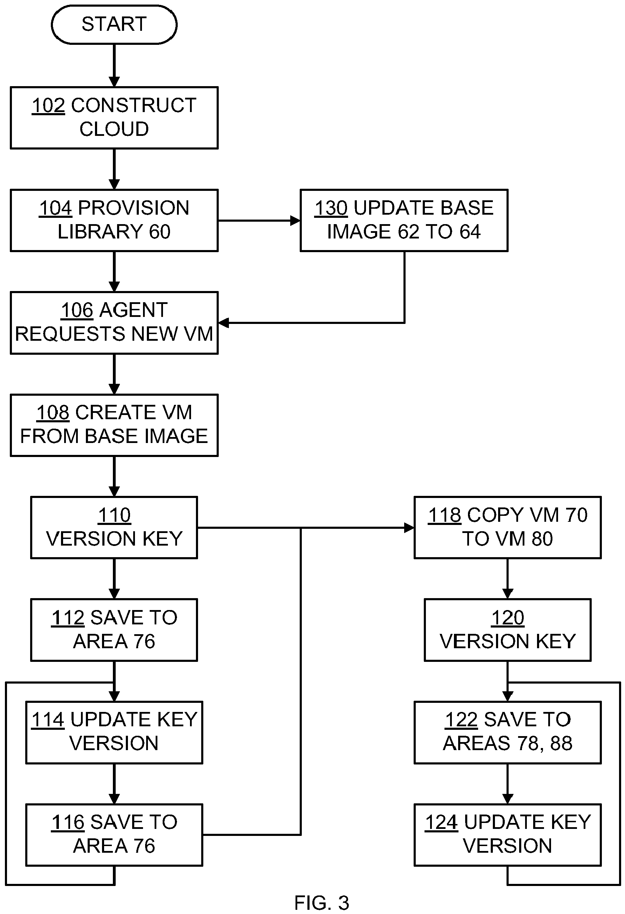

Disk encryptor 74 may be provided by tenant 46. However, the method described with reference to FIG. 3 below relies on disk encryptor 74 behaving in a certain way. Disk encryptor 74 is more likely to behave correctly if it is provided, already configured to behave in that way, as part of library base image 62 when virtual machine 70 is created. Such provision is therefore preferred, provided that tenant 46 trusts cloud proprietor sufficiently to use cloud proprietor's disk encryptor. An alternative is for cloud proprietor to provide tenants 46 with detailed instructions on how to configure their own disk encryptors 74.

If base image 72 is modified, the modifications may be written to base image 72. The discrepancies from library image 62 are then stored as a delta file 92 by deduplicator 90. Alternatively, the modifications may be stored in specific data area 76 by disk encryptor 74, and base image 72 may then remain identical to library image 62. The choice may depend on whether the modifications to base image 72 are expected to be in any way confidential or sensitive. The optimum arrangement may depend on how the operating system and other programs in base image 72 handle modifications, if that is known. In particular, some programmers consider it good practice to restrict user customizations rigorously to small, discrete files outside the main program structure. Subsequent management may then be simplified by explicitly assigning those customization files to image specific area 78, and assuming that the core of base image 72 is unchanged. However, if possible customizations are not segregated, or the location of the customization files is not known, it may be necessary to explicitly compare the whole of base images 62 and 72 and generate a delta file.

A second exemplary virtual machine 80 contains a base image 82 that is another instance of the same base image 62 in the library 60, a disk encryption utility 84, an area 86 of applications and other data copied from first virtual machine 70, and an area 88 of applications and other data specific to second virtual machine 80. First virtual machine 70 then contains an area 76 of applications and/or other data that it is willing to share privately with second virtual machine 80, as well as area 78 of applications and/or other data that is strictly specific to first virtual machine 70. Second virtual machine 80 may be, apart from specific data area 88, a copy of first virtual machine 70. Second virtual machine 80 specific data area 88 may be encrypted by disk encryptor 84 using its own key. Second virtual machine 80's shared private data area 86 is encrypted using the same key or keys as first virtual machine 70's shared private data area 76.

Shared private data areas 76 and 86 can then be deduplicated by deduplicator 90, and any delta can be stored in delta file 92 at the cloud level. Alternatively, second virtual machine 80, or a separate deduplication device within user domain 69, can deduplicate shared private data area 86 of second virtual machine 80 against first virtual machine 70's shared private data area 76 and save the delta in second virtual machine 80's own specific data area 88. Instances 76 and 86 of first virtual machine 70 private data area 76 can then remain identical. The choice may depend on the expected nature of discrepancies between the two instances 76 and 86, and on the encryption algorithm used. In particular, with a discrete block encryption algorithm any discrepancies between the two unencrypted files may impact only the corresponding blocks of the encrypted files, so that the size of the delta file remains manageable. However, with a chained encryption algorithm any discrepancies between the two unencrypted files may propagate into later blocks, so that even a small discrepancy in an early block renders the entire later part of the encrypted image totally different. In order to maintain efficient deduplication, it is then necessary for the instances 76 and 86 to be compared and the delta file extracted on the unencrypted data within domain 69.

Referring now also to FIG. 3, in one example of a method of volume encryption, in step 102 cloud 22 is constructed, organized, and put into operation. Although this is a complex procedure, it may be carried out in a manner known to those of ordinary skill in the art, and in the interests of conciseness is not described in more detail here.

In step 104, cloud 22 is provisioned with base image library 60, containing at least one virtual machine base image 62.

In step 106, enterprise 46, through its enterprise agent 42, requests resources from cloud 22 to create a new virtual machine (VM) 70.

In step 108, cloud 22, through the activity of cloud controller 38, assigns storage 36 on which the virtual machine can be stored as a disk image when not in use, authorizes the assignment of processor capacity 26 and RAM 32 to run the virtual machine when it is in use, and generates first virtual machine 70 as an instance of base image 62. In an embodiment, at this time first virtual machine 70 is provisioned with operating system base image 72, disk encryptor 74, and an empty machine specific data area 76 protected by a key, stored in key manager 44, that is issued by key manager 44 under the direction of cloud controller 38. If base image 62 is unencrypted, then base image 72 is unencrypted. If base image 62 is encrypted, then base image 72 is encrypted with the same key.

In step 110, the key for machine specific data area 76 is immediately versioned. In accordance with conventional procedures for managing versioned keys, new data created after the versioning is encrypted with the new key, but pre-existing data, which here is the base image 72, remains encrypted with its previous key (which, as previously noted, may be no encryption at all. The new key is exclusive to tenant enterprise 46. Thus, in step 112, any data saved to first virtual machine 70 specific data area 76, which may include the delta file if base image 72 is modified, can be accessed only with the permission of tenant enterprise 46. However, base image 72 can still be deduplicated against base image 62.

In step 114, a "snapshot" backup of the first virtual machine 70 to a disk image may be taken, and the tenant-exclusive key is further versioned. Then, in step 116, any further new data in machine specific area 76 is saved with the new key version. In accordance with known key versioning procedures, data saved with the previous tenant-exclusive key version may be retained under the previous key version. In this respect key "versioning" is distinguished from "re-keying" in which existing data encrypted under the old key are re-encrypted under the new key. Some key-versioning procedures allow old data to be progressively re-encrypted under the new key version until a full re-keying is effected. However, in the present embodiment the unaltered parts of base image 72 are excluded from re-keying, and remain non-encrypted or encrypted under the key assigned to base image 62. Key management systems are currently available that support a partially encrypted and partially non-encrypted space. Steps 114 and 116 may be repeated indefinitely. Where snapshot backups have been taken and archived in step 114, the state of first virtual machine 70 may at any time be rolled back to a previous snapshot, discarding subsequent changes to machine specific data in area 76 and rolling back any subsequent key version changes.

In step 118, which may take place at any time after step 110, a second virtual machine 80 may be created by cloning first virtual machine 70. In step 120, the key assigned to second virtual machine 80 is immediately versioned. However, existing data is excluded from key version updating, so that data area 86, which is a copy of first virtual machine 70 specific data area 76, remains encrypted under first virtual machine 70's current key. The key version data for data area 86 preferably explicitly references first virtual machine 70's key, in such a way that when first virtual machine 70's key version is updated in subsequent iterations of step 114, the update is automatically pushed to data area 86.

In steps 122 and 124, similarly to steps 114 and 116, the key version for second virtual machine 80 specific data area 88 is updated, and new data is stored under the new key version. Where new key versions are generated by a pseudorandom sequence or other deterministic process, the process should be reseeded at step 118 so that different key version sequences are generated for first and second virtual machines 70, 80.

In step 130, library base image 62 may be updated to form base image 64. For example, where library base image 62 comprises an image of an operating system, and an update is issued to the operating system, it may be preferred to preserve an unaltered copy 62, and create and update a new copy 64, because different computer operators have different policies regarding how soon, or after how much testing, they will adopt such updates. Alternatively, if a new operating system image 64 is installed, deduplicator 90 may recognize it as a modified version of image 62. In either case, library base image 64 may be deduplicated against base image 62, and a delta stored in delta file 92. Subsequent virtual machines 70 may then be cloned using either library base image 62 or updated base image 64.

Because of the hierarchical nature of the creation of new machine images, the state of a machine may be dependent on changes to an earlier machine. For example, if library base image 62 is changed after first virtual machine 70 is created, instead of being duplicated as new library base image 64, that change will impact all virtual machines 70, 80 derived from that library base image. If machine specific data area 76 of first virtual machine 70 is changed after second virtual machine 80 is created, that change will impact first virtual machine specific data area 86 of second virtual machine 80. In that case, the changes may be allowed to propagate forward from the original image into the copy images. However, if a change to an original image affects data that may have been modified in a copy image, that could result in an inconsistent state for data in the copy image. Even if integrity or consistency is not at issue, the change may be one that the later machine does not want.

Alternatively, therefore, the deduplicator 90 may be configured to recognize changes to the parent copy of a duplicated area as a discrepancy, and to update the delta file of the child copy so as to reverse in the child the unwanted changes from the parent. Alternatively, the shared machine specific data area 76 of first virtual machine 70 may be frozen when second virtual machine 80 is created, and any subsequent changes stored as a delta file in an area 78 exclusive to first virtual machine 70, so that areas 76 and 86 remain identical. The appropriate approach may depend on the specific data involved, and different approaches may be configured for different areas 72, 82, 86.

As may be seen from the foregoing description, the present methods, programs, and apparatus make it possible to deduplicate substantial parts of the disk images of parallel physical or virtual machine instances at the hypervisory level, while allowing the users of individual machines the protection and convenience of full disk encryption at a more local level.

Although specific embodiments have been described, various modifications are possible without departing from the spirit of the invention or the scope of the appended claims, and features of the different embodiments may be combined into one embodiment.

For example, as described, cloud controller 38 combines various functions, including acting as a firewall and gateway for cloud 22, acting as a resource manager for cloud 22, and hypervising virtual machine 50. These and other functions may be grouped or distributed between various physical computers and/or logical entities in various ways. A single key manager 44 is shown in FIG. 1. However, cloud controller 38 and tenant enterprises 46 may instead maintain separate key managers 44, depending on their level of mutual trust. The use of multiple key managers 44 to service a single disk encryptor 74 requires disk encryptor 74 to store the identity of the correct key manager as part of the identity of each key. Alternatively, where base image 62 is not encrypted, the key manager 44 of the relevant tenant enterprise 46 may be the only one that an individual disk encryptor needs to access. Enterprise agent 42 and key manager 44 are shown in FIG. 1 as separate devices. Where an enterprise 46 has its own key manager 44, that may instead be a function of the same physical hardware device as enterprise agent 42.

In the interests of simplicity, it has been assumed in describing the embodiments that each of the principal components is an ordinary general-purpose computer specially programmed. However, specialized hardware is commercially available. For example, dedicated key managers are available that resemble the system unit of a general purpose computer, but with limited input/output facilities, sometimes with additional security measures, and sometimes with a more secure encryption unit on a separate expansion card within the system unit. Reference is made to the FIPS 140-2 standard for examples of appropriate precautions for various levels of security.

In the interests of simplicity, a system with one level of user domain 69 containing virtual machines 70, 80 in the cloud 22 has been described. A more elaborate system, with multiple levels of domain having progressively changing levels of shared trust and shared information is possible.

In the interests of simplicity, it has been assumed that each virtual machine 70, 80 uses only one disk wrapping key in each version for the whole area 76, 78, 88 that it encrypts locally. However, good cryptographic practice limits the amount of data that should be encrypted with a single key. For greater security in a large virtual disk, techniques using multiple keys to increase security may of course be used. In an embodiment, the key manager 44, or a process in the cloud controller 38 that interfaces with key manager 44, may be provided with a key index table that shows which key is used for each block or sector of the encrypted area. The key index table may also be used to track which version of each key is used for each block or sector.

As shown in FIG. 2, second virtual machine 80 is created by copying the whole current contents of first virtual machine 70. Alternatively, however, first virtual machine 70 may already include an exclusive area 78 that is not shared with second and subsequent virtual machines. In that case, no later than step 118, the key versioning of first virtual machine 70 should be updated so that exclusive area 78, similarly to second virtual machine specific area 88, is protected by a key different from the key for shared private area 76, and the exclusive area 78 key is not shared with later clone machines 80, etc.

As shown in FIG. 3, the primary method of deduplication is "snapshot" deduplication of entire functional areas of the virtual disk, for example, the entire base image area 72, 82, with generation of a delta file against a corresponding area, for example, the library base image 62. Alternatively, however, other forms of deduplication, including compression deduplication in when duplicates are identified, one copy of the identical data is stored, and other instances are replaced by a pointer to the stored copy.

Where compression deduplication is used, an agent running within user domain 69 may generate hash tags for blocks of data, and provide only the hash tags to the deduplicator 90. The deduplicator 90 can then maintain a library of hash tags, and identify and deduplicate identical blocks of data, without being given access to the actual data, even in encrypted form.

User customization of the shared material may be controlled by configuration of the data areas. For example an operating system may be designed to boot entirely from a single disk volume, and base image area 72 may be configured as a separate virtual disk volume from user areas 76, 78. In that embodiment, any customizations of the operating system by the user will naturally be lost every time the virtual machine 70 is shut down, unless the cloud controller 38 permits them to be saved in a delta file 92. The next time the virtual machine 70 is started up, base image area 72 is regenerated as a fresh instance of library base image 62, which does not include any changes made by any of the users of domains 69. In some situations, that protection of the integrity of the operating system is highly desirable. If, on the other hand, it is desired to permit user customization of the operating system, then cloud controller 38 can permit customization data to be saved in delta file 92, and may be able to control what customizations can be saved.

The base image area 72 may in use include ephemeral information, for example, in temp directories and swap blocks, that is maintained for the duration of an operating session, but then discarded when the virtual machine 70 is shut down. For example, pages from the library base image 62 may be swapped into the physical address space occupied by user domain 69 as needed. If the library base image 62 is stored in encrypted form, it is decrypted on the fly. In that case, when a base image page is swapped out, the library image page can be discarded, and a fresh instance of the page generated from the library base image 62 when needed. However, any delta information may then need to be stored temporarily, and it may be desirable to store the delta information in encrypted form under an encryption key known only to the user. It is then necessary to manage different encryption keys, or states of no-encryption and encryption, for the base and delta parts of the image area 72.

That can be done by using a key roll-over function that is commonly available in commercial encryption software packages, under which information encrypted before the time of the roll-over remains encrypted under an old key, while new information generated after the roll-over is encrypted under a new key. The user's decryption utility may be configured to launch itself with the cloud controller's base image library encryption key (which may be no key, if the library 60 is not encrypted), but then immediately perform a roll-over to a new key of its own. The delta files are then naturally encrypted under the new key, while the base image continues to be available under the library encryption key, without the need for specially written software to manage the different keys. When the virtual machine 70 is shut down, the user deletes the new key, and the temporary delta files are discarded, including any delta files relating to the roll-over. The roll-over process should be re-seeded each time the virtual machine 70 starts up, so that it does not generate the same "new" key every time.

Accordingly, reference should be made to the appended claims, rather than to the foregoing specification, as indicating the scope of the invention.

## Claims

1. A computer system, comprising:
a first region including a base image in the form of machine readable code stored on a non-volatile storage medium;
a second region including a machine image in the form of machine readable code stored on a non-volatile storage medium; and
a deduplicator;
wherein the second region machine image comprises a base part sufficiently similar to the base image for deduplication, and a part special to the second region machine image;
wherein the first region base image and the second region machine image are deduplicated by the deduplicator; and
wherein the second region special part is encrypted by full disk encryption using a key not available to the first region.

2. The computer system of claim 1, wherein the first region is a cloud and the second region is a user domain within the cloud.

3. The computer system of claim 1, wherein the second region comprises a virtual machine, of which the second region machine image is a virtual disk image.

4. The computer system of claim 1, wherein the second region comprises a virtual machine, of which the second region base part and the second region special part comprise separate virtual disk images.

5. The computer system of claim 1, wherein the first region comprises a virtual machine, of which the first region base image is at least part of a virtual disk image.

6. A method of operating a computer system, comprising:
providing in a first region a base image in the form of machine readable code stored on a non-volatile storage medium;
permitting the base image to be copied into a second region to form a base part of a machine image in machine readable code stored on a non-volatile storage medium;
permitting only a part of the second region other than the base part to be encrypted using a key not available to the first region; and
deduplicating the first region base image and the second region machine image.

7. A method according to claim 6, wherein the first region is a cloud and the second region is a user domain within the cloud, and wherein permitting the base image to be copied into the second region comprises permitting a user having control of the user domain to copy the base image into the user domain.

8. A method according to claim 7, wherein permitting the user having control of the user domain to copy the base image into the user domain comprises permitting the user to create a virtual machine, of which the second region machine image is a virtual disk image.

9. A method according to claim 6, wherein in the second region the base part and the other part are configured as virtual disk images, comprising encrypting and/or decrypting the other part using full disk encryption.

10. A method according to claim 6, wherein the first region comprises a virtual machine, of which the first region base image is at least part of a virtual disk image, and wherein permitting the base image to be copied into the second region comprises permitting a user having control of the first region to copy said virtual machine to create another virtual machine.

11. A non-volatile computer-readable storage medium containing code operable to cause a suitable computer to:
copy a base image from a first region into a second region to form a base part of a machine image;
permit only a part of the second region other than the base part to be encrypted using a key not available to the first region; and
deduplicate the first region base image and the second region machine image.

12. A storage medium according to claim 11, further comprising code of a base image comprising at least an operating system for a computer.

13. A storage medium according to claim 12, wherein the base image further comprises code of a disk encryptor utility configured to encrypt only said part of the second region other than the base part using a key not available to the first region.

14. A storage medium according to claim 11, wherein said code operable to copy the base image into the second region comprises code operable to create a virtual machine of which the second region machine image is a virtual disk image.

15. A storage medium according to claim 14, wherein said code operable to copy the base image is operable to copy at least part of a virtual disk image of a virtual machine from the first region into the second region to create another virtual machine.

16. A storage medium according to claim 11, comprising code operable to configure the base part and the other part in the second region as virtual disk images, and code operable to encrypt and/or decrypt the other part using full disk encryption.
